# EUROPÄISCHE PATENTSCHRIFT

(11) **EP 2 406 122 B1**
(45) Veröffentlichungstag und Bekanntmachung des Hinweises auf die Patenterteilung: **17.09.2014**
(21) Anmeldenummer: 10707911.3
(22) Anmeldetag: 11.03.2010
(51) Int. Cl.: B62J 6/18, B62K 19/30, B62K 25/28

(54) **RAHMENELEMENT ZUR FÜHRUNG EINER LEITUNG FÜR EINEN GEFEDERTEN ZWEIRADRAHMEN**
FRAME ELEMENT FOR GUIDING A CABLE FOR TWO WHEEL SUSPENSION FRAME
ÉLÉMENT DE CADRE POUR LE GUIDAGE D'UN CÂBLE POUR CADRE DE SUSPENSION DE BICYCLETTE

(30) Priorität: 12.03.2009 DE 102009012765
(43) Veröffentlichungstag der Anmeldung: 18.01.2012
(73) Patentinhaber: Klieber, Jochen, 83342 Tacherting (DE)
(72) Erfinder: Klieber, Jochen, 83342 Tacherting (DE)
(74) Vertreter: Schmitz, Alexander
(86) Internationale Anmeldenummer: PCT/EP2010/053062
(87) Internationale Veröffentlichungsnummer: WO 2010/103057

(56) Entgegenhaltungen:
- EP-A1- 1 743 829
- EP-A1- 1 787 899
- EP-A2- 1 504 987
- WO-A1-99/15396
- DE-A1- 2 803 565
- DE-A1- 3 701 803
- DE-A1- 19 620 457
- GB-A- 1 062 932
- US-A- 4 634 138
- US-A- 5 658 001
- US-A1- 2005 253 357
- US-A1- 2006 145 446

## Beschreibung

### GEBIET DER ERFINDUNG:

Die Erfindung betrifft die Führung von Leitungen an Zweirädern. Insbesondere betrifft die Erfindung einen gefederten Zweiradrahmen mit einem Rahmenelement zur Führung einer Leitung an dem gefederten Zweiradrahmen, ein Fahrrad mit einem gefederten Zweiradrahmen sowie ein Verfahren zur Anbringung und Führung einer Leitung an einem gefederten Zweiradrahmen.

### TECHNOLOGISCHER HINTERGRUND:

Zur Steigerung des Fahrkomforts, aber auch zur Erhöhung der Fahrsicherheit werden Fahrradrähmen neben Federgabeln auch mit gefederten und gedämpften Hinterbauten versehen. Mittels unterschiedlicher Rahmenkonstruktionen werden Schläge, die von Unebenheiten auf dem Fahrweg herrühren durch eine weitegehend unabhängige Dynamik des Hinterbaus vom Vorderbau kompensiert.

Die Federung des Hinterbaus bringt neben dem Komfortgewinn auch zahlreiche Probleme mit sich. Durch die Trennung des Hinterbaus vom Rahmen verliert das gesamte Fahrrad grundsätzlich an Steifigkeit. Hinzu kommt, dass vollgefederte Rähmen im Vergleich zu ungefederten Rähmen oft ein höheres Gewicht aufweisen und einen höheren Wartungsaufwand zum Beispiel an dem hinteren Dämpfungselement und dessen Ansteuerung benötigen. Zudem kann die Bewegung des Hinterbaus beim Ein- und Ausfedern Einflüsse auf den Antrieb des Fahrrads haben. Die Hersteller von Federungselementen versuchen diesen Problemen durch eine Reihe von konstruktiven Maßnahmen zu begegnen.

DE 196 20 457 A1 beschreibt ein Fahrrad mit einem gefederten Zweiradrahmen gemäß dem Oberbegriff von Anspruch 1, bei dem zwei Rahmenteile mittels eines Gelenks verbunden, das auch ein Zusammenklappen des Rahmens ermöglicht. Um die Schwenkbarkeit der beiden Rahmenteile zu gewährleisten, sind Bowdenzüge bzw. Leitungen am Rahmen in der Nähe des Drehgelenks entlanggeführt. Die Leitungen und züge können auch direkt über das Drehgelenk verlaufen, wobei sie dafür etwas länger ausgeführt sind als die Rahmenrohre, an denen sie entlangführen, so dass sie sich beim Verschwenken der beiden Rahmenteile um das Drehgelenk herum anlegen, ohne die Bewegung der beiden Rahmenteile zu behindern. GB 1 062 932 A beschreibt ein Fahrrad, bei dem das Ausfallende mittels eines Gelenks federnd ausgebildet ist. Eine Bremsleitung wird unterhalb des Schwenkgelenks mit Abstand an diesem vorbeigeführt. In einer anderen Ausführung treten die Brems- und Schaltzüge 95 aus dem zentralen Rahmenrohr heraus und passieren das Gelenk seitlich. EP 1 504 987 A2 beschreibt ein Fahrrad mit einem gefederten Hinterbau, bei dem die hintere Bremsleitung mit deutlichem Abstand zu dem Gelenk des schwenkbar angebrachten Hinterbaus angeordnet ist. Elektrische Zuleitungen verlaufen innerhalb der Rahmenelemente, ebenfalls mit Abstand zu dem Schwenkgelenk oberhalb des Tretlagers. WO 99/15396 A1 zeigt ein Dämpfungssystem für einen Fahrradrahmen, bei dem der Hinterbau im Bereich des Tretlagers schwenkbar gelagert ist, wobei die Aufwärtsbewegung des hinteren Ausfallendes durch ein auf Zug belastbares Federelement in Form eines Kabels gedämpft wird. Für das Einleiten der Kräfte wird das Kabel mit Abstand zu dem Schwenklager geführt. DE 37 01 803 A1 zeigt ein zusammenklappbares Fahrrad mit einem gefederten Hinterbau, bei dem die Kettenstreben von dem oberen Ausfallstreben gelöst werden können, so dass die oberen Ausfallstreben an das Sitzrohr angelegt werden können und die Kettenstreben um die Tretlagerachse nach unten verschwenkt an das Unterrohr des Rahmens angelegt werden können, welches Vorderbau und Tretlager verbindet. Damit die Seilzüge für die Schaltung der Schwenkbewegung folgen können, sind sie die Leitungen mit Abstand zu den jeweiligen Schwenkpunkten geführt. EP 1 743 829 A1 beschreibt ein Fahrrad mit einem gefederten Hinterbau, bei dem die Bremsleitung seitlich an dem Rahmengelenk oberhalb des Tretlagers vorbeigeführt werden. US 2005/253357 A1 beschreibt ein Fahrrad mit gefedertem Hinterbau. Die Leitung für die Schaltung ist mit Kabelführungselementen an den Rahmenrohren befestigt und weist in den Bereichen, in denen sich Rahmenteile gegeneinander bewegen, ein entsprechend großes Spiel auf, so dass es nicht zu Zugbelastungen durch das Federn des Hinterbaus kommt. US 5 658 001 A beschreibt einen Federmechanismus für einen Hinterbau, bei dem ein Zugseil seitlich des Unterrohrs des Rahmens verläuft und über eine Rolle im Bereich des Tretlagers nach oben geführt wird, wo es an dem beweglichen oberen Ende des Hinterbaus montiert ist.

### ZUSAMMENFASSUNG DER ERFINDUNG:

Es kann als eine Aufgabe der Erfindung angesehen werden, eine verbesserte Führung von Leitungen an Zweirädern bereitzustellen.

Es sind ein gefederter Zweiradrahmen mit einem Rahmenelement zur Führung einer Leitung an dem gefederten Zweiradrahmen bzw. an dem Rahmenelement und gegebenenfalls zumindest teilweise in dem Rahmenelement, ein Fahrrad mit einem gefederten Zweiradrahmen und ein Verfahren zur Anbringung und Führung einer Leitung an einem gefederten Zweiradrahmen gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen den gefederten Zweiradrahmen, das Fahrrad und das Verfahren.

### Definitionen:

Im Kontext der Erfindung kann unter dem Begriff "Rahmenelement" beispielsweise ein Unterrohr, ein Oberrohr, ein Sitzrohr, eine Kettenstrebe, eine Strebe, eine Wippe oder eine Schwinge verstanden werden. Dabei sind diese Elemente jeweils Teil eines Zweiradrahmens. Ebenso kann jede mögliche Kombination aus diesen Bestandteilen des Zweiradrahmens als "Rahmenelement" verstanden werden.

Weiterhin wird im Kontext der Erfindung der Begriff "Leitung" beispielsweise für einen Bowdenzug mit entsprechender Außenhülle, für eine hydraulische Leitung, eine pneumatische Leitung oder eine elektrische Leitung verwendet.

Weiterhin kann im Kontext der Erfindung ein "Befestigungselement" als separates Bauteil ausgeführt sein. Aber auch eine Ausführung als Bauteil, das fest mit dem Rahmenelement zum Beispiel durch Verschweißen verbunden ist, ist möglich. Kernaspekt des Begriffs ist dabei, dass das "Befestigungselement" zur Aufnahme und Fixierung des weiteren Rahmenelements an das Rahmenelement ausgeführt ist.

Weiterhin wird im Kontext der Erfindung der Begriff "Führungsvorrichtung" für ein mechanisches Bauteil verwendet, das zum Zwecke der räumlichen Führung der Leitung an einem Zweiradrahmen angebracht ist. Die Führungsvorrichtung kann beispielsweise ein an dem Zweiradrahmen angeschweißtes oder angelötetes Bauteil sein, durch welches die Leitung entlang eines gewünschten räumlichen Verlaufs geführt wird. Die "Führungsvorrichtung" kann auch ein Kanal, eine Bohrung innerhalb eines Rahmenelements oder ein Führungsrohr sein, das als Einsatz in Öffnungen oder Bohrungen des Rahmenelements eingefügt wird. Kernaspekt all dieser Ausführungsbeispiele der "Führungsvorrichtung" ist, dass die Leitung in gewünschter Weise geführt wird.

Der Begriff "Abstand der Oberfläche der Leitung zur Drehachse" ist derart zu verstehen, dass keine parallele Anordnung der Leitung zur Drehachse erfolgt. Vielmehr schneidet die Leitung die Drehachse entweder in einem Schnittpunkt, was einem Abstand der beiden von 0 mm entspricht. Oder aber die Leitung und die Drehachse liegen windschief bzw. schräg zueinander im Raum, in welchem Fall der Abstand die kürzeste Entfernung zwischen der Oberfläche der Leitung und der Drehachse ist.

Dabei umfasst der Begriff "Drehachse" sowohl eine gegenständliche, materielle Achse, es kann aber auch eine immaterielle, abstrakte räumliche Drehachse sein.

Gemäß einem Ausführungsbeispiel der Erfindung ist ein Rahmenelement eines gefederten Zweiradrahmens zur Führung einer Leitung an dem Zweiradrahmen (und damit auch an dem Rahmenelement) angegeben. Dabei weist das Rahmenelement eine Führungsvorrichtung zum Führen der Leitung an dem Zweiradrahmen auf, wobei das Rahmenelement zur beweglichen Anbringung eines weiteren Rahmenelements mittels eines Lagers ausgeführt ist. Weiterhin weist die Leitung eine äußere Oberfläche auf. Weiterhin besitzt die äußere Oberfläche der Leitung im geführten Zustand einen Abstand von einer Drehachse des Lagers, der zwischen 0 und 10 mm beträgt.

Mit anderen Worten wird die Leitung an dem Rahmenelement und damit an dem Zweiradrahmen durch die Führungsvorrichtung derart geführt, dass sie im Wesentlichen die Drehachse des Lagers schneidet. Dabei kann die Leitung durch die Führungsvorrichtung beispielsweise senkrecht zur Drehachse geführt werden.

Aufgrund des Durchgangs der Leitung durch die Drehachse oder durch einen zylindrischen Bereich mit Radius 10 mm um die Drehachse herum kann verhindert werden, dass bei einer Relativbewegung der beiden Rahmenelemente gegeneinander eine Längung der Leitung verursacht wird. Aufgrund dieser minimierten oder verhinderten Längung der Leitung können unerwünschte Effekte auf diejenigen Komponenten an dem Zweirad, die mit der Leitung angesteuert werden, verhindert werden. Diese Komponenten können beispielsweise Bremsen, Schaltungen, Dämpfungselemente oder Vorrichtungen zur Veränderung der Sitzhöhe sein. Dabei kann der Abstand der Oberfläche der Leitung zur Drehachse auch in dem Bereich zwischen 0 und 15 mm liegen, wenn eine vorliegende Rahmenkonstruktion bei einem Abstand von 15 mm noch keine merkliche Zuglängung verursacht. Ein wichtiger Aspekt der Erfindung ist dabei, dass der Abstand von der Drehachse derart gewählt wird, dass sich bei einer durchschnittlichen Bewegung der beiden Rahmenelemente gegeneinander keine Längung der Leitung ergibt, die beispielsweise ein unerwünschtes Schalten an einem hinteren Schaltwerk des Zweirades verursacht. Weiterhin können durch die erfindungsgemäße Führung der Leitung mechanischer Abrieb an dem Zweiradrahmen und an der Leitung verhindert bzw. minimiert werden.

Dabei sind die beiden Rahmenelemente mittels des Lagers beweglich aneinander angebracht, um beispielsweise eine Relativbewegung eines Vorderbaus des Zweirades gegenüber einem Hinterbau des Zweirades zu ermöglichen. Die aufgrund solch einer Bewegung verursachte Längung der Leitung bzw. der verursachte mechanische Abrieb an dem Rahmen und / oder der Leitung (aufgrund einer durch die Bewegung der Rahmenelemente verursachte Bewegung der Leitung) kann mittels der Erfindung minimiert bzw. verhindert werden.

Das Rahmenelement kann, falls gewünscht, ebenso das Lager aufweisen. Dabei kann das Lager zum Beispiel eine durchgängige gegenständliche Drehachse aufweisen, die beispielsweise als Metallachse ausgeführt ist. Zur Durchführung durch die Drehachse kann beispielsweise eine Bohrung in der Drehachse vorhanden sein, durch welche die Leitung hindurchgeführt wird. Aber auch eine Führung der Leitung, die beabstandet von der Drehachse erfolgt und den gewünschten, oben beschriebenen Effekt erzielt ist möglich.

Weiterhin kann das Zweirad ein Fahrrad und der Zweiradrahmen ein Fahrradrahmen sein.

Gemäß einem weiteren Ausführungsbeispiel der Erfindung ist das Rahmenelement ein Vorderbau des gefederten Zweiradrahmens und das weitere Rahmenelement ist eine Schwinge des gefederten Zweiradrahmens.

Dabei kann der Vorderbau beispielsweise das Unterrohr, Sitzrohr, Oberrohr, Steuerrohr, das Tretlagergehäuse sowie ein Befestigungselement bzw. einen Befestigungsbereich für den Hinterbau aufweisen. Die Schwinge hingegen kann als Teil des Hinterbaus verstanden werden, die im Fall eines viergelenkingen voll gefederten Zweirades die Kettenstreben ersetzt. Dabei ist die Schwinge beispielsweise mittels eines ein- oder zweiteiligen Schwingenlagers an dem Befestigungselement bzw. an dem Befestigungsbereich des Vorderbaus angebracht und gleichzeitig drehbar gelagert. Dabei kann die Schwinge z.B. im Bereich des Tretlagers an dem Befestigungselement angebracht sein.

Gemäß einem weiteren Ausführungsbeispiel der Erfindung ist das Lager ein zweiteiliges Hauptlager der Schwinge mit einem ersten Teil und einem zweiten Teil. Weiterhin erfolgt die Führung der Leitung zwischen dem ersten Teil und dem zweiten Teil des Hauptlagers.

Dabei kann ein rechter Teil der Schwinge, der einer rechten Kettenstrebe entspricht, mittels eines ersten Teils des Schwingenhauptlagers an den Vorderbau angebracht werden. Ein linker zweiter Teil der Schwinge, welcher der linken Kettenstrebe entspricht, kann mittels des zweiten Teils des Schwingenhauptlagers drehend gelagert an dem Vorderbau des Zweiradrahmens angebracht werden. Es ist möglich, dass zwischen dem ersten und dem zweiten Teil des Hauptlagers der Schwinge keine gegenständliche Drehachse verwenden zu müssen. Jedoch ist diese Drehachse räumlich abstrakt zwischen dem ersten und dem zweiten Teil des Hauptlagers der Schwinge vorhanden und beschreibt eine Drehung der Schwinge um diese Achse. Mit anderen Worten ist es möglich, zwischen dem ersten und dem zweiten Teil des Hauptlagers der Schwinge einen leeren Raum bereitzustellen, durch welchen die Leitung mittels der Führungsvorrichtung ohne weitere Vorkehrungen geführt werden kann.

Gemäß einem weiteren Ausführungsbeispiel der Erfindung weist die Schwinge zwei Kanalöffnungen und einen Kanal auf, wobei sich der Kanal zwischen den beiden Kanalöffnungen erstreckt und wobei der Kanal zur Führung der Leitung ausgeführt. ist.

Um die Leitung weiterhin nachdem sie die Drehachse des Lagers mit dem erfindungsgemäßen Abstand von 0 bis 10 mm passiert hat vor mechanischen Einwirkungen und z.B. Witterungseinflüssen wie Schmutz schützen zu können, wird sie in die Schwinge durch eine erste Kanalöffnung eingeführt. Weiterhin erstreckt sich die Leitung entlang und innerhalb des gesamten Kanals und tritt an der zweiten Kanalöffnung wieder aus, um zu der anzusteuernden Komponente, wie beispielsweise einem Schaltwerk einer Bremse, einem Dämpfungselement und einer Sitzvorrichtung geführt zu werden.

Gemäß einem weiteren Ausführungsbeispiel der Erfindung weist das Rahmenelement ein Sitzrohr mit zumindest einer ersten Öffnung und ein Befestigungselement zur Anbringung des Lagers auf. Dabei weist das Befestigungselement zumindest eine zweite Öffnung auf und die Leitung verläuft in geführtem Zustand durch die erste Öffnung in dem Sitzrohr und durch die zweite Öffnung in dem Befestigungselement.

Somit ist in diesem Ausführungsbeispiel der Erfindung das Rahmenelement als das Sitzrohr eines Zweiradrahmens und das Unterrohr eines Zweiradrahmens zu verstehen, wobei das Unterrohr wiederum das Befestigungselement und das Tretlagergehäuse aufweist. Zum Beispiel kann an das Unterrohr das Tretlagergehäuse mit dem Befestigungselement angeschweißt sein kann. In diesem Fall kann Befestigungselement auch als Befestigungsbereich des Rahmenelements verstanden werden. Damit soll ausgedrückt werden, dass das Befestigungselement nach beispielsweise einem Anschweißen integraler Bestandteil des Rahmenelements ist und die Anbringung des weiteren Rahmenelements mittels des Lagers in diesem Befestigungsbereich des Rahmenelements erfolgt.

Dabei ist das Befestigungselement dadurch charakterisiert, dass das weitere Rahmenelement mittels des Lagers, das an dem Befestigungselement angebracht wird, beweglich mit dem Rahmenelement verbunden werden kann. Dabei kann das andere Rahmenelement beispielsweise ein Teil des Hinterbaus des Zweiradrahmens sein, beispielsweise eine Schwinge. In diesem Fall kann das Befestigungselement als Schwingenaufnahme bezeichnet werden. In diesem Ausführungsbeispiel ist es möglich, dass die Führungsvorrichtung durch einen Kanal und / oder ein Führungsrohr (Einsatz) bereitgestellt wird, der durch das Sitzrohr hindurch reicht und sich anschließend in durch das Befestigungselement erstreckt. Dieses Ausführungsbeispiel wird in den folgenden Figuren detailierter beschrieben werden.

Es ist weiterhin möglich, dass das Sitzrohr mehrere Öffnungen aufweist, so dass sich zwischen zwei Öffnungen der Kanal oder ein erster Teil davon erstrecken kann. In diesen Kanal kann dann ein Einsatz wie ein Führungsrohr eingefügt werden. Auch das Befestigungselement kann, falls gewünscht, mehrere Öffnungen zur Führung der Leitung aufweisen, so dass sich beispielsweise ein geradliniger Kanal von der ersten Öffnung des Sitzrohrs durch das Sitzrohr, durch das Befestigungselement bis hin zur zweiten Öffnung des Befestigungselements erstreckt. Mit anderen Worten kann ein geradliniger Führungskanal bereitgestellt werden, der aus zwei Teilkanälen, einem in dem Sitzrohr und einem in dem Befestigungselement besteht. Dabei sind auch nicht geradlinige Führungen möglich.

Weiterhin kann die Führung der Leitung lediglich durch die Wandungen des Sitzrohrs und die Wandungen des Befestigungselements erreicht werden, welche Wandungen somit als Führungsvorrichtungen dienen.

Dabei können die Öffnungen als Bohrungen ausgeführt sein. Diese können, müssen aber nicht kreisrund sein.

Dabei kann die Führung der Leitung in diesem und in jedem anderen Ausführungsbeispiel innerhalb des Rahmenelements verlaufen. Beispielsweise kann die Leitung durch das Sitzrohr hindurch und durch das Befestigungselement hindurch geführt werden, so dass es unter der sichtbaren Oberfläche des Zweiradrahmens geführt wird. Dadurch kann sich ein wirksamer Schutz für die Leitung vor äußeren mechanischen Einwirkungen und Witterungseinflüssen ergeben.

Gemäße einem weiteren Ausführungsbeispiel der Erfindung verläuft die Leitung außerhalb des Sitzrohres und durch das Lager.

Gemäß einem weiteren Ausführungsbeispiel der Erfindung ist die zweite Öffnung zum Austritt der Leitung aus dem Befestigungselement ausgeführt.

Dabei kann diese zweite Öffnung beispielsweise in dem rückwärtigen Bereich liegen, die zwischen bei dem hinteren Laufrad des Zweirades und dem Tretlager angeordnet ist. Dies ermöglicht eine kontinuierliche Führung der Leitung aus dem Befestigungselement heraus mit einer anschließenden Weiterleitung und Führung der Leitung in weiteren Führungsvorrichtungen, wie beispielsweise einem Kanal in einer Schwinge.

Gemäß einem weiteren Ausführungsbeispiel der Erfindung weist die zweite Öffnung einen Abstand von der Drehachse auf, der 0 bis 30 mm beträgt und zum Beispiel ausgewählt ist aus der Gruppe bestehend aus 0 bis 10 mm, 10 bis 20 mm, und 20 bis 30 mm.

Aufgrund einer Relativbewegung zwischen dem Rahmenelement und dem weiteren Rahmenelement kann eine Bewegung der Leitung im Bereich des Austritts aus der zweiten Öffnung hervorgerufen werden. Um einen mechanischen Kontakt zwischen der Oberfläche der Leitung und der Innenwandung der Öffnung zu vermeiden, kann die Öffnung möglichst nahe an der Drehachse platziert werden. Da die Bewegung der Leitung sich lediglich in einem hinteren zweiten Abschnitt der Leitung erfolgt, können nur in diesem hinteren Abschnitt ein mechanischer Kontakt und damit ein nachteiliger Abrieb an dem Rahmen oder der Leitung entstehen.

Mit anderen Worten kann die Leitung in zwei Bereiche eingeteilt werden. Die Leitung weist einen ersten vorderen Bereiche und einen zweiten hinteren Bereiche auf. Dabei sind die Begriffe "vorne" und "hinten" im Bezugssystem des Zweiradrahmens folgendermaßen im Kontext der Erfindung definiert: Der erste vordere Teil der Leitung beginnt an der Drehachse und erstreckt sich hin zum Vorderbau des Zweirades in Richtung Vorderrad. Der zweite hintere Teil der Leitung beginnt ebenso an der Drehachse und erstreckt sich hin zum Hinterbau des Fahrrades in Richtung Hinterrad. Dabei kann aufgrund der erfindungsgemäßen Führung der Leitung erreicht werden, dass bei einer Relativbewegung des Rahmenelements gegenüber dem weiteren Rahmenelement lediglich der zweite Teil der Leitung eine Bewegung durchführt, die keine Längung der Leitung verursacht. Ebenso kann ein mechanischer Abrieb aufgrund von Bewegungen der Leitungen vermieden werden.

Mit anderen Worten befindet sich die zweite Öffnung auf Höhe der Drehachse (oder in einem Abstand gemäß den angegebenen Bereichen), so dass der zweite Bereich der Leitung, der sich durch eine Bewegung der beiden Rahmenelemente gegeneinander in Bewegung versetzen lässt, vollständig aus dem Rahmenelement ausgetreten ist. Jedoch beinhaltet dieses Ausführungsbeispiel ebenso, dass sich die Öffnung noch über einen Bereich von 0 bis 10 mm, 10 bis 20 mm oder 20 bis 30 mm in diesen zweiten beweglichen Teil der Leitung hinein erstreckt. Ursprung dieser Abstandsmessung ist dabei jeweils die Drehachse des Lagers.

Sollte die zweite Öffnung eine Wandstärke mit einer Innenseite und Außenseite aufweisen, so ist der Abstand von der Drehachse aus bis zur Innenseite gemeint. Die Innenseite der Öffnung zeigt dabei in das Befestigungselement hinein.

Mit anderen Worten kann aufgrund der möglichst nahen Platzierung der zweiten Öffnung an die Drehachse erreicht werden, dass der sich bewegende Teil der Leitung auch bei maximalem Ausschlag einer durchschnittlich zu erwartenden Bewegung der beiden Rahmenelemente gegeneinander kein Kontakt zwischen der Öffnung und der Leitung hergestellt wird.

Gemäß einem weiteren Ausführungsbeispiel der Erfindung weist eine erste Oberfläche der zweiten Öffnung eine derartige Form auf, dass bei einer Bewegung des Rahmenelements gegenüber dem weiteren Rahmenelement das Herstellen eines Kontaktes zwischen der Leitung und der ersten Oberfläche vermieden wird.

Dabei kann die Bewegung jede Relativbewegung der beiden Rahmenelemente gegeneinander sein. Mit anderen Worten ist die Öffnung in ihrer Form derart ausgeführt, dass bei einer durchschnittlichen Bewegung der beiden Rahmenelemente gegeneinander und die dadurch verursachte Bewegung des zweiten Bereichs der Leitung es nicht zu einem Kontakt zwischen der Leitung und der Oberfläche der Öffnung führt. Dies verhindert nachteiligen Abrieb sowohl an der Leitung als auch an dem Zweiradrahmen.

Da die Amplitude der Bewegung der Leitung (im zweiten Bereich) bei einer Bewegung der beiden Rahmenelemente gegeneinander mit dem Abstand von der Drehachse zunehmen kann, kann die Öffnung beispielsweise nach hinten einen gewissen Öffnungswinkel aufweisen. Dadurch wird ein Kontakt zwischen der Leitung und der Öffnung also dem Rahmenelement vermieden bzw. minimiert.

Gemäß einem weiteren Ausführungsbeispiel der Erfindung ist die erste Oberfläche der zweiten Öffnung ausgewählt aus der Gruppe bestehend aus zylindrische Oberfläche, und konische Oberfläche.

Weiterhin ist es möglich, dass die Oberfläche der zweiten Öffnung ein Teil eines Kegelmantels darstellt. Durch diese verschiedenen Oberflächenformen ist es möglich, den von der Drehachse aus zunehmenden Ausschlag der Leitung im zweiten sich bewegenden Bereich der Leitung derart zu kompensieren, dass kein Kontakt zwischen der Innenwandung der Öffnung und der Leitung an sich hergestellt wird.

Gemäß einem weiteren Ausführungsbeispiel der Erfindung weist das Rahmenelement weiterhin einen Einsatz auf. Dabei ist der Einsatz zum Einfuhren in die zweite Öffnung ausgeführt. Weiterhin weist eine zweite Oberfläche des Einsatzes eine derartige Form auf, dass bei einer Bewegung des Rahmenelements gegenüber dem weiteren Rahmenelement das Herstellen eines Kontaktes zwischen der Leitung und der zweiten Oberfläche vermieden wird.

Dabei kann der Einsatz beispielsweise als Führungsrohr ausgeführt sein, der in einem Führungskanal, der sich beispielsweise durch ein Sitzrohr und das Befestigungselement erstrecken kann, eingeführt wird. Dabei kann dieser Einsatz beispielsweise aus Kunststoff oder auch aus Metall gefertigt sein. Auch Kombinationen sind möglich. Weiterhin kann dieses Führungsrohr ein konisches oder trompetenförmiges erstes Ende aufweisen, welches Ende sich bei Einführung des Einsatzes an der zweiten Öffnung befindet. Weiterhin ist der Einsatz zur Führung der Leitung innerhalb des Einsatzes ausgeführt. Mit anderen Worten wird die Leitung in den Einsatz eingeführt und der Einsatz wiederum wird in die zweite Öffnung eingeführt. Dabei kann der Einsatz beispielsweise freie Bereiche zwischen einem Sitzrohr und einem Befestigungselement überbrücken, so dass eine Leitung von einer ersten Öffnung im Sitzrohr kontinuierlich und geschützt bis zur zweiten Öffnung in dem Befestigungselement geführt wird. An dem Ende des Einsatzes tritt die Leitung nach Führung durch die Drehachse oder mit einem Abstand von bis zu 10 bzw. 15 mm zu der Drehachse wieder aus dem Einsatz und dem Befestigungselement aus.

Dabei ist auch hier ein Kernaspekt dieses Ausführungsbeispiels, dass die zweite Oberfläche des Einsatzes einen derartigen Öffnungswinkel aufweist, dass bei einer Bewegung der Leitung, die durch eine durchschnittliche Bewegung der beiden Rahmenelemente gegeneinander hervorgerufen wird, kein Kontakt zwischen der Leitung und der zweiten Oberfläche hergestellt wird.

Gemäß einem weiteren Ausführungsbeispiel der Erfindung ist die zweite Oberfläche ausgewählt aus der Gruppe bestehend aus zylindrische Oberfläche, und konische Oberfläche.

Weiterhin ist es möglich, dass die zweite Oberfläche ein Teil eines Kegelmantels ist. Dabei kann ein Öffnungswinkel des Einsatzes in Abhängigkeit von dem Durchmesser der zweiten Öffnung gewählt werden.
Gemäß einem weiteren Ausführungsbeispiel der Erfindung ist der Einsatz weiterhin zum Durchführen durch zumindest eine der beiden Öffnungen ausgeführt. Weiterhin erstreckt sich der Einsatz von der ersten Öffnung bis zu der zweiten Öffnung.

Mit anderen Worten ist es beispielsweise möglich, ein Führungsrohr von der ersten Öffnung des Sitzrohres bis hin zur zweiten Öffnung des Befestigungselements als Einsatz in das Rahmenelement einzuführen. Dabei kann sich eine geradlinige oder auch ungeradlinige Führung der Leitung ergeben.

Dabei wird mittels dieses Führungsrohrs die Leitung derart geführt, dass sie die Drehachse des Lagers schneidet oder in einem Abstand von 0 bis 10 mm die Drehachse beabstandet passiert.

Gemäß einem weiteren Ausführungsbeispiel der Erfindung ist ein Fahrrad mit einem Rahmenelement gemäß einem der vorherigen Ausführungsbeispiele angegeben.

Gemäß einem weiteren Ausführungsbeispiel der Erfindung weist das Fahrrad die Leitung und das Lager auf.

Gemäß einem weiteren Ausführungsbeispiel der Erfindung ist ein Verfahren zur Anbringung und Führung einer Leitung an einem Rahmenelement eines gefederten Zweiradrahmens angegeben. Dabei weist das Verfahren die folgenden Schritte auf: Bereitstellen eines Rahmenelements mit einer Führungsvorrichtung zum Führen der Leitung, Anbringen eines weiteren Rahmenelements an dem Rahmenelement mittels einer Lagers, wobei das Anbringen derart erfolgt, dass das Rahmenelement eine Relativbewegung zu dem zweiten Rahmenelement ausführen kann. Weiterhin Durchführen der Leitung durch die Führungsvorrichtung, wobei das Durchführen derart erfolgt, dass eine äußere Oberfläche der Leitung im geführten Zustand einen bstand von einer Drehachse des Lagers besitzt, der zwischen 0 und 10 mm beträgt.

Mit Hilfe des erfindungsgemäßen Verfahrens ist es möglich, eine Leitung an einem gefederten Zweiradrahmen derart zu verlegen, dass Relativbewegung zwischen dem Rahmenelement und dem weiteren Rahmenelement weder Längung der Leitung noch mechanischen Abrieb im Bereich des Befestigungselements verursachen.

Ergänzend sei darauf hingewiesen, dass "umfassend" und "aufweisend" keine anderen Elemente oder Schritte ausschließen und "eine" oder "ein" keine Vielzahl ausschließen. Ferner sei darauf hingewiesen, dass Merkmale oder Schritte, die mit dem Verweis auf eines der obigen Ausführungsbeispiele beschrieben worden sind, auch in Kombination mit anderen Merkmalen oder Schritten anderer oben beschriebener Ausführungsbeispiele der Erfindung verwendet werden können. Bezugszeichen in den Ansprüchen sind nicht als Einschränkungen anzusehen.

Im Folgenden werden mit Verweis auf die Figuren Ausführungsbeispiele der Erfindung beschrieben.

### KURZE BESCHREIBUNG DER FIGUREN:

Fig. 1 zeigt eine schematische, zweidimensionale Darstellung eines Teilschnitts eines gefederten Zweiradrahmens mit einem Rahmenelement gemäß einem Ausführungsbeispiel der Erfindung.
Fig. 2 zeigt eine weitere schematische dreidimensionale Darstellung eines Teilschnitts eines gefederten Zweiradrahmens mit einem Rahmenelement gemäß einem Ausführungsbeispiel der Erfindung.
Fig. 3 zeigt eine weitere schematische dreidimensionale Darstellung eines Teilschnitts eines gefederten Zweiradrahmens mit einem Rahmenelement gemäß einem Ausführungsbeispiel der Erfindung.
Fig. 4 zeigt eine weitere schematische dreidimensionale Darstellung eines Rahmenelements gemäß einem Ausführungsbeispiel der Erfindung.
Fig. 5 zeigt eine schematische dreidimensionale Rückansicht der zweiten Öffnung an einem Rahmenelement gemäß einem Ausführungsbeispiel der Erfindung.
Fig. 6 zeigt eine schematische, dreidimensionale Darstellung eines Einsatzes gemäß einem Ausführungsbeispiel der Erfindung.
Fig. 7 zeigt ein Flussdiagramm von Verfahrensschritten gemäß einem Ausführungsbeispiel der Erfindung.

In den folgenden Figurenbeschreibungen werden für die gleichen oder ähnlichen Elemente die gleichen Bezugsziffern verwendet.

Die Darstellungen in den Figuren sind schematisch und nicht maßstäblich.

### DETAILLIERTE BESCHREIBUNG VON AUSFÜHRUNGSBEISPIELEN:

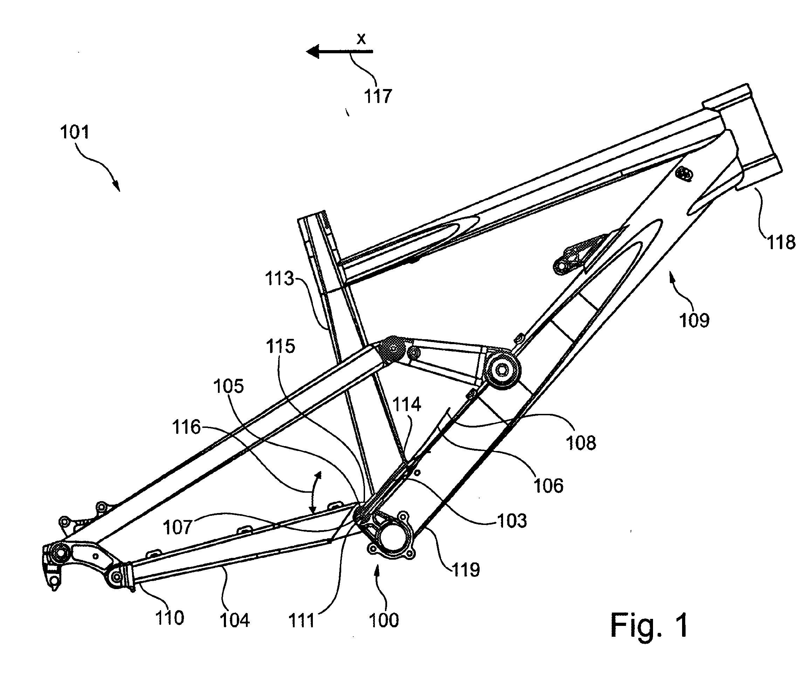

Fig. 1 ein Rahmenelement 100 eines gefederten Zweiradrahmens 101 zur Führung einer Leitung 108. Ebenso ist das weitere Rahmenelement 104 gezeigt, das mittels eines Lagers 105 beweglich an dem Rahmenelement 100 angebracht ist. Dabei ist die Bewegung, die dadurch ermöglicht wird, durch den Pfeil 116 dargestellt. Ebenso weist die Leitung 108 eine äußere Oberfläche 106 auf. Es ist deutlich in Fig. 1 zu sehen, dass die Leitung 108 durch eine Öffnung 114 in dem Sitzrohr 113 hindurchgeführt wird. Dabei erfolgt die Führung derart, dass die äußere Oberfläche der Leitung in diesem gezeigten geführten Zustand einen Abstand von der Drehachse 107 des Lagers 105 besitzt, der zwischen 0 und 10 mm beträgt. Dadurch kann eine Längung der Leitung vermieden bzw. reduziert werden, wenn eine Bewegung des Rahmenelements 100 gegenüber dem weiteren Rahmenelement 104 stattfindet. Weiterhin ist mit 117 die x-Achse gezeigt, die sich von dem vorderen Bereich des Zweiradrahmens, der in Fig. 1 im rechten Teil des Bildes gezeigt ist, in den hinteren Bereich des Zweiradrahmens erstreckt. Der hintere Bereich ist im linken Teil des Bildes gezeigt. Somit ist im vorderen Bereich (vorne) der Vorderbau 109 des Zweiradrahmens gezeigt, der untere anderem ein Steuerrohr 118 umfasst. Weiterhin ist der Hinterbau mit der Schwinge 110 gezeigt, wobei die Schwinge das weitere Rahmenelement 104 darstellt.

Dabei ist in diesem Ausführungsbeispiel der Erfindung das erfindungsgemäße Rahmenelement durch das Sitzrohr 113 sowie das Unterrohr 119 dargestellt, das ein Befestigungselement 115 aufweist, an welchem das Lager 105 angebracht wird. Das Befestigungselement wird in diesem Ausführungsbeispiel als Schwingenaufnahme bezeichnet. Mit anderen Worten wird die Schwinge drehend gelagert an der Schwingenaufnahme angebracht. Durch die Drehachse 107 dieser Lagerung wird die Leitung hindurchgeführt bzw. mit einem Abstand von dieser Drehachse von bis zu 10 mm entlang geführt.

Aufgrund der Durchführung der Leitung durch den erfindungsgemäßen Bereich, der sich mit einem Radius von bis zu 10 mm um die Drehachse herum erstreckt (dabei ist die Drehachse als Kreismittelpunkt dieses Kreises anzusehen) kann erreicht werden, dass aufgrund einer Bewegung der Leitung, die durch eine Bewegung der Rahmenelemente 116 hervorgerufen wird, keine Verlängerung der Leitung verursacht wird.

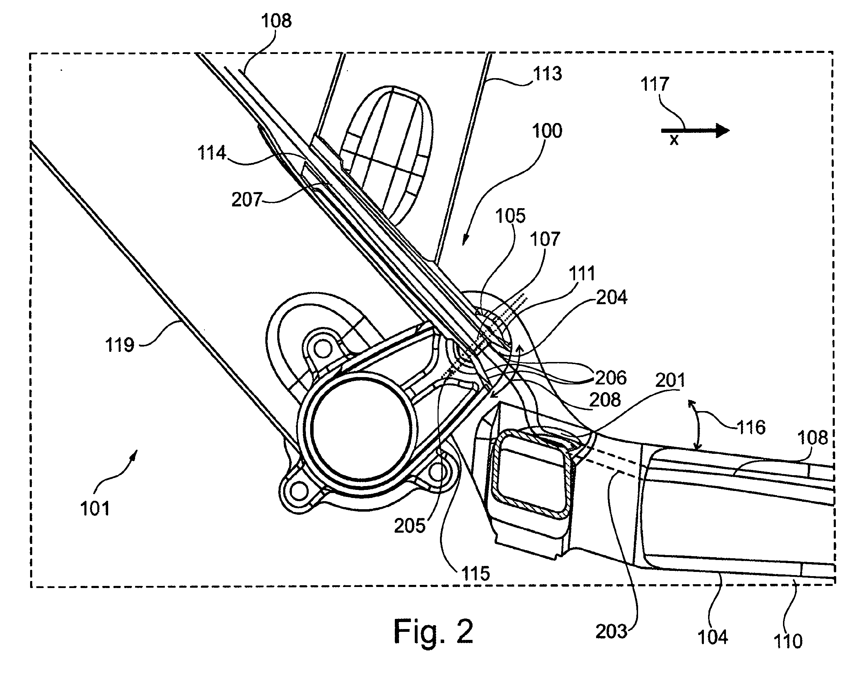

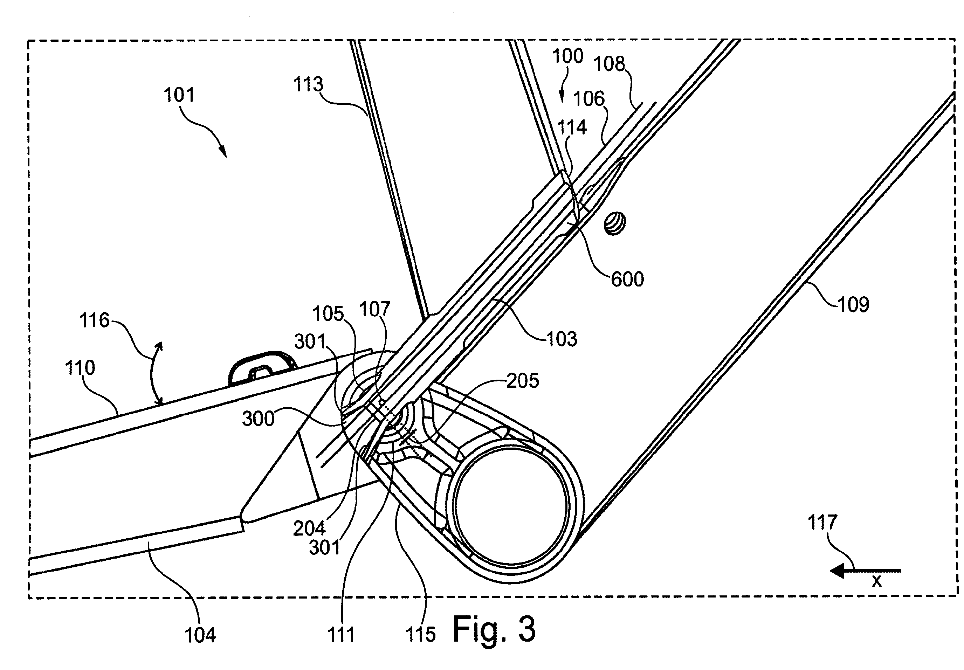

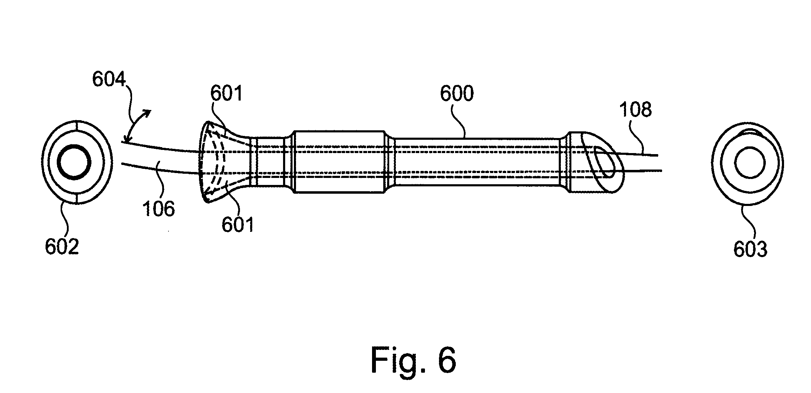

Fig. 2 zeigt ein weiteres Ausführungsbeispiel der Erfindung. Es ist ein Rahmenelement 100 eines gefederten Zweiradrahmens 101 gezeigt. Dabei weist das Rahmenelement das Unterrohr 119, das Sitzrohr 113, das Befestigungselement 115 auf. Dabei kann das Befestigungselement beispielsweise an das Unterrohr angeschweißt sein. Es ist weiterhin die Leitung 108 in geführter Position gezeigt, wobei sich ein Führungskanal 207 in dem Sitzrohr und in dem Befestigungselement 115 erstreckt. Dabei ist dieser Führungskanal 207 beispielsweise derart ausgeführt, dass ein Einsatz, der in den folgenden Figuren 3 und 6 näher beschrieben wird, eingeführt werden kann.

Aufgrund des Lagers 105, das eine Drehachse 107 aufweist, die hier als Punkt in Draufsicht dargestellt ist, ist es möglich, eine Relativbewegung 116 zwischen dem Rahmenelement 101 und dem weiteren Rahmenelement 104 zu ermöglichen. Dabei ist das weitere Rahmenelement als Schwinge 110 ausgeführt, an der eine erste Kanalöffnung 201 zu sehen ist, an welcher ein Kanal 203 zur Führung der Leitung 108 beginnt. Der Kanal endet an der zweiten Kanalöffnung (nicht gezeigt). Weiterhin ist die erste Öffnung 114 in dem Sitzrohr 113 gezeigt, an welchem sich ein Führungskanal 207 innerhalb des Rahmenelements 101 ausbildet. Damit ist die Führung der Leitung unterhalb der Oberfläche des Rahmenelements und damit für einen Betrachter nicht sichtbar ausgeführt. Dies kann die Leitung sowohl vor mechanischen Einflüssen als auch vor Witterungseinflüssen schützen.

An dem Ende des Kanals 207 ist die zweite Öffnung 204 des Befestigungselements 115 gezeigt, die einen Abstand 205 von der Drehachse aufweist, der ausgewählt sein kann aus einer Gruppe bestehend aus 0 bis 10 mm, 10 bis 20 mm und 20 bis 30 mm. Der Abstand ist durch den Pfeil 205 dargestellt. Weiterhin ist deutlich zu sehen, dass eine erste Oberfläche 206 der zweiten Öffnung 204 konisch ausgeführt ist. Mit anderen Worten weist die Öffnung 204 in Richtung des hinteren Bereich des Zweiradrahmens einen Öffnungswinkel auf, der es ermöglicht, bei einer Bewegung 116 der beiden Rahmenelemente einen Kontakt zwischen der Leitung 108 und der Oberfläche 206 zu vermeiden. Der Öffnungswinkel ist durch den Pfeil 208 dargestellt. Dabei befindet sich in Fig. 2 der hintere Bereich auf der rechten Seite. Damit kann verhindert werden, dass aufgrund der Bewegung der beiden Rahmenelemente 101 und 104 gegeneinander mechanischer Abrieb des Rahmens im Bereich der Öffnung 204 an dem Rahmen oder der Leitung entsteht. Weiterhin ist mit 117 die x-Achse gezeigt.

Fig. 3 zeigt ein weiteres Ausführungsbeispiel des Rahmenelements 100. Dabei ist ein Vorderbau 109 eines gefederten Zweiradrahmens 101 drehend gelagert an eine Schwinge 110 angebracht. Dabei agiert die Schwinge 110 als weiteres Rahmenelement 104, das eine Bewegung 116 aufgrund des Lagers 105 durchführen kann. Es ist weiterhin die Drehachse 107 des Lagers 105 gezeigt, die sich senkrecht zur Ebene dieser Darstellung erstreckt. Weiterhin ist eine Führungsvorrichtung 103 gezeigt, die hier als Einsatz 600 dargestellt wird, der in den Führungskanal, welcher innerhalb des Sitzrohres und des Befestigungselements entlangläuft, eingesetzt wird. Dabei kann dieser Einsatz in die erste Öffnung 114 des Sitzrohres 113 gesteckt werden. Dabei verläuft der Einsatz 600 entlang des sich dort auf Grund z.B. einer Bohrung erstreckenden Kanals innerhalb des ganzen Sitzrohrs innerhalb des ganzen Befestigungselements 115. Der Einsatz weist an einem ersten Ende 300 eine konische oder trompetenförmige Öffnung 301 auf. Dabei kann die Kontur des Einsatzes 600 in diesem Bereich des Endes 300 an die Kontur der Öffnung 204 angepasst sein. Beispielsweise kann die äußere Oberfläche des Einsatzes in diesem Bereich 300 an der Innenwandung der Öffnung 204 anliegen. Auch eine formschlüssige Ausführung ist möglich.

Mit anderen Worten wird mit dem Einsatz 600 ein Kanal für die Leitung 108 bereitgestellt, womit die Leitung geführt wird. Dabei erfolgt die Führung derart, dass die äußere Oberfläche 106 der Leitung in geführtem Zustand einen Abstand von der Drehachse des Lagers besitzt, der zwischen 0 und 10 mm beträgt. Damit kann verhindert werden, dass eine Längung der Leitung über ein gewünschtes Maß hinaus erfolgt. In dieser Seitenansicht ist der erste Teil 111 des zweiteiligen Lagers 105 deutlich zu sehen. Weiterhin ist mit 117 die x-Achse analog zu den Figuren 1 und 2 gezeigt.

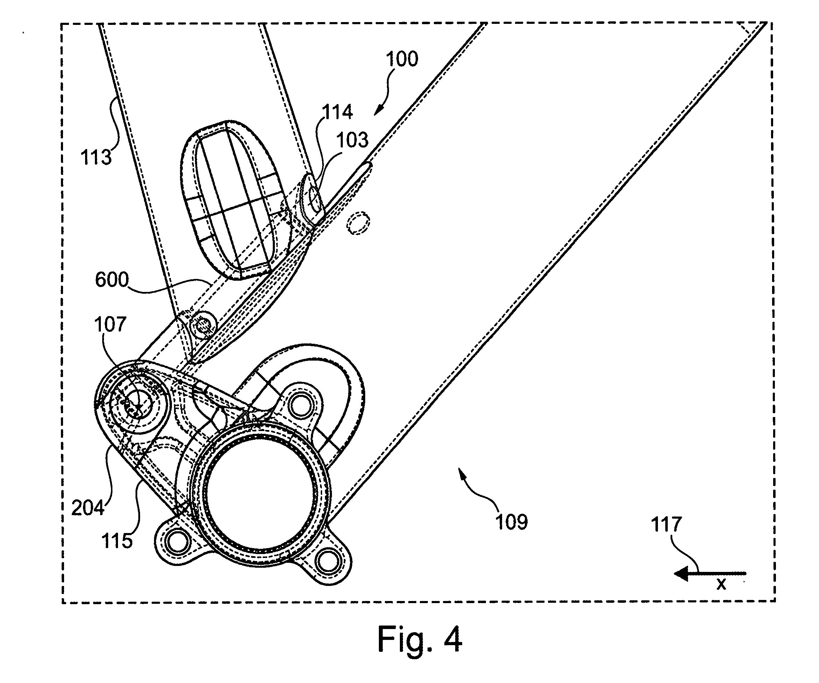

Fig. 4 zeigt einen Vorderbau 109 eines gefederten Zweiradrahmens mit einem Rahmenelement 100. Dabei ist ein Sitzrohr 113 mit einer Öffnung 114 gezeigt und ein Befestigungselement 115 mit einer zweiten Öffnung 204. Dabei erstreckt sich ein Einsatz 600 von der ersten Öffnung 114 bis zur zweiten Öffnung 204 und stellt eine Führungsvorrichtung 103 zur Führung der Leitung bereit. Dabei wird die Leitung derart geführt, dass die äußere Oberfläche der Leitung im geführten Zustand einen Kreis schneidet, der um die Drehachse 107 mit einem Radius von bis zu 10 mm umfasst, schneidet. Weiterhin ist mit 117 die x-Achse gezeigt.

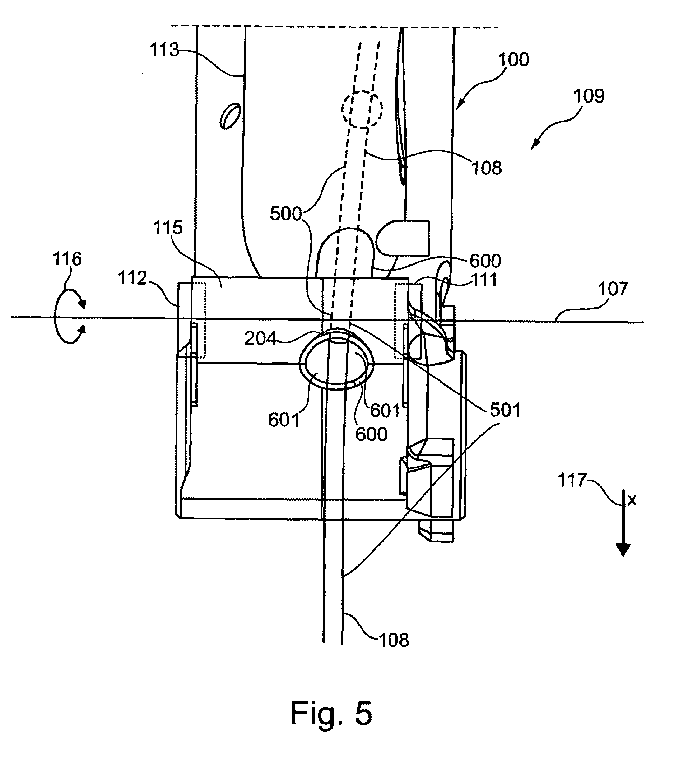

Fig. 5 zeigt eine Rückansicht der zweiten Öffnung 204, aus der die Leitung 108 aus dem Befestigungselement 115 das Teil des Rahmenelements 100 ist hervorkommt. Es ist weiterhin ein zweiteiliges Hauptlager der Schwinge mit einem ersten Teil 111 und einem zweiten Teil 112 gezeigt. Dabei findet sich zwischen den beiden Teilen ein Hohlraum, durch welchen die Leitung 108 problemlos geführt werden kann. Es ist weiterhin der Einsatz 600 gezeigt, der als Führungsrohr die Leitung durch das Sitzrohr 113 und durch das Befestigungselement 115 hindurchführt. Dabei ist das Befestigungselement derart ausgeführt, dass der Hinterbau eines Fahrrades mittels der Lager 111 und 112 drehend gelagert angebracht werden kann. Dabei ist die Drehachse mit 107 gezeigt. In dieser Ansicht ist zu sehen, dass die Leitung 108 in einen ersten Bereich 500 und einen zweiten Bereich 501 unterteilt werden kann. Dabei ist der zweite Bereich 501 derjenige Teil der Leitung, der von der Drehachse 107 hin zum hinteren Ende des Zweiradrahmens verläuft, in dieser Ansicht in Richtung Bildunterkante. Der erste Bereich 500 erstreckt sich zwischen dem Sitzrohr 113 und der Drehachse. Dabei ist das hintere Ende des Zweiradrahmens, hier nicht gezeigt, befindet sich jedoch am unteren Ende der Figur. Dabei ist der zweite Bereich der Leitung 501 derjenige, an dem bei einer Bewegung der Schwinge eine Bewegung verursacht wird. In dem ersten Bereich 500 kann auf Grund der erfindungsgemäßen Führung und Leitung der Leitung eine Bewegung der Leitung vermieden werden.

Weiterhin weist der Einsatz 600 eine zweite Oberfläche 601 auf, wobei diese Oberfläche eine derartige Form besitzt, dass bei einer Bewegung 116 des Rahmenelements gegenüber dem weiteren Rahmenelement (nicht gezeigt) das Herstellen eines Kontakts zwischen der Leitung und der zweiten Oberfläche vermieden wird. Weiterhin ist mit 117 die x-Achse gezeigt.

Fig. 6 zeigt den Einsatz 600 mit einer zweiten Oberfläche 601 und einem inneren Kanal, durch welchen die Leitung 108 mit der Oberfläche 106 geführt werden kann. Dabei ist die zweite Oberfläche beispielsweise eine konische Oberfläche bzw. weist die Form eines Teils eines Kegelmantels auf. Aufgrund dieser trompetenförmigen Öffnung des Einsatzes 600 kann eine Bewegung 604 der Leitung, die durch eine Bewegung 116 (nicht gezeigt) der beiden Rahmenelemente gegeneinander hervorgerufen wird, derart kompensiert werden, dass kein Kontakt zwischen der Oberfläche 601 und der Leitungsoberfläche 106 hergestellt wird.

602 und 603 zeigen jeweils eine Draufsicht auf die beiden Enden des Einsatzes 600, wodurch der Kanal zur Durchführung der Leitung 108 deutlich wird.

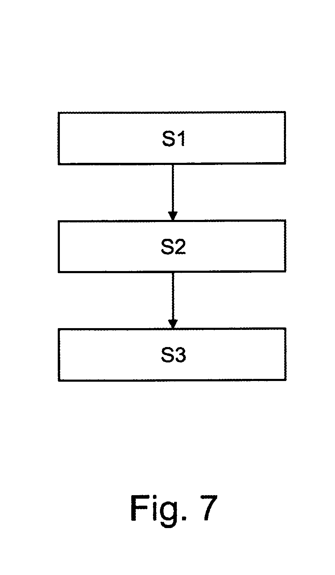

Fig. 7 zeigt ein Verfahren zur Anbringung und Führung einer Leitung an einem Rahmenelement eines gefederten Zweiradrahmens, wobei in einem ersten Schritt S 1 das Bereitstellen eines Rahmenelements mit einer Führungsvorrichtung zum Führen der Leitung angegeben ist. In einem zweiten Schritt erfolgt das Anbringen eines weiteren Rahmenelements an dem Rahmenelement mittels eines Lagers. Dabei erfolgt das Anbringen derart, dass das Rahmenelement eine Relativbewegung zu dem zweiten Rahmenelement ausführen kann. In einem dritten Schritt wird die Leitung durch die Führungsvorrichtung durchgeführt (S3). Dabei erfolgt das Durchführen derart, dass eine äußere Oberfläche der Leitung im geführten Zustand einen Abstand von einer Drehachse des Lagers besitzt, der zwischen 0 und 10 mm beträgt. Aufgrund dieser erfindungsgemäßen Befestigung und Führung der Leitung mittels dieses Verfahrens kann verhindert werden, dass die Leitung aufgrund einer Bewegung der beiden Rahmenelemente gegeneinander gelenkt wird und/oder dass Abrieb aufgrund von Bewegungen der Leitungen am Rahmen erzeugt werden.

## Patentansprüche

1. Gefederter Zweiradrahmen (101) zur Führung einer Leitung an dem Zweiradrahmen, mit einem Rahmenelement und einem weiteren Rahmenelement,
wobei das Rahmenelement ein Vorderbau (109) des gefederten Zweiradrahmens ist;
wobei das weitere Rahmenelement eine Schwinge (110) des gefederten Zweiradrahmens ist;
das Rahmenelement aufweisend:
eine Führungsvorrichtung (103) zum Führen der Leitung (108) an dem gefederten Zweiradrahmen;
wobei das Rahmenelement mittels eines Lagers (105) beweglich an der Schwinge (104) angebracht ist ;
wobei das Lager ein zweiteiliges Hauptlager des weiteren Rahmenelements ist, und einen ersten Teil (111) und zweiten Teil (112) aufweist; **dadurch gekennzeichnet, dass**
die Führung der Leitung zwischen dem ersten Teil und dem zweiten Teil des Hauptlagers erfolgt; wobei die Führungsvorrichtung derart ausgebildet ist, dass die Leitung derart geführt ist, dass sie einen zylindrischen Bereich mit Radius 10 mm um die Drehachse des Lagers schneidet.

2. Gefederter Zweiradrahmen gemäß Anspruch 1,
wobei die Schwinge zwei Kanalöffnungen (201) und einen Kanal (203) aufweist;
wobei sich der Kanal zwischen den beiden Kanalöffnungen erstreckt; und
wobei der Kanal zur Führung der Leitung ausgeführt ist.

3. Gefederter Zweiradrahmen gemäß einem der vorherigen Ansprüche, das Rahmenelement weiterhin aufweisend:
ein Sitzrohr (113) mit zumindest einer ersten Öffnung (114);
ein Befestigungselement (115) zur Anbringung des Lagers (105);
wobei das Befestigungselement zumindest eine zweite Öffnung (204) aufweist; und
wobei die Leitung in geführtem Zustand durch die erste Öffnung in dem Sitzrohr und die zweite Öffnung in dem Befestigungselement verläuft.

4. Gefederter Zweiradrahmen gemäß Anspruch 3,
wobei die zweite Öffnung zum Austritt der Leitung aus dem Befestigungselement ausgeführt ist.

5. Gefederter Zweiradrahmen gemäß Anspruch 4,
wobei die zweite Öffnung einen Abstand (205) von der Drehachse aufweist, der ausgewählt ist aus der Gruppe bestehend aus 0 mm bis 10 mm, 10 mm bis 20 mm, und 20 mm bis 30 mm.

6. Gefederter Zweiradrahmen gemäß einem der vorherigen Ansprüche 4 oder 5,
wobei eine erste Oberfläche (206) der zweiten Öffnung eine derartige Form aufweist, dass bei einer Bewegung (116) des Rahmenelements gegenüber dem weiteren Rahmenelement das Herstellen eines Kontaktes zwischen der Leitung und der ersten Oberfläche vermieden wird.

7. Gefederter Zweiradrahmen gemäß Anspruch 6
wobei die erste Oberfläche ausgewählt ist aus der Gruppe bestehend aus zylindrische Oberfläche, und konische Oberfläche.

8. Gefederter Zweiradrahmen gemäß einem der vorherigen Ansprüche 4 bis 7, das Rahmenelement weiterhin aufweisend:
einen Einsatz (600);
wobei der Einsatz zum Einführen in die zweite Öffnung ausgeführt ist; und
wobei eine zweite Oberfläche (601) des Einsatzes eine derartige Form aufweist, dass bei einer Bewegung (116) des Rahmenelements gegenüber dem weiteren Rahmenelement das Herstellen eines Kontaktes zwischen der Leitung und der zweiten Oberfläche vermieden wird.

9. Gefederter Zweiradrahmen gemäß Anspruch 8,
wobei die zweite Oberfläche ausgewählt ist aus der Gruppe bestehend aus zylindrische Oberfläche, und konische Oberfläche.

10. Gefederter Zweiradrahmen gemäß Anspruch 8 oder 9,
wobei der Einsatz weiterhin zum Durchführen durch zumindest eine der beiden Öffnungen ausgeführt ist; und
wobei sich der Einsatz von der ersten Öffnung bis zu der zweiten Öffnung erstreckt.

11. Fahrrad mit einem gefederten Zweiradrahmen gemäß einem der Ansprüche 1 bis 10.

12. Fahrrad gemäß Anspruch 11, weiterhin aufweisend:
die Leitung.

13. Verfahren zur Anbringung und Führung einer Leitung an einem gefederten Zweiradrahmen, das Verfahren aufweisend die folgenden Schritte:
Bereitstellen eines Rahmenelementes mit einer Führungsvorrichtung zum Führen der Leitung (S1);
Anbringen eines weiteren Rahmenelements an dem Rahmenelement mittels eines Lagers (S2);
wobei das weitere Rahmenelement eine Schwinge (110) des gefederten Zweiradrahmens ist;
wobei das Anbringen derart erfolgt, dass das Rahmenelement eine Relativbewegung zu dem zweiten Rahmenelement ausführen kann;
wobei das Lager ein zweiteiliges Hauptlager des weiteren Rahmenelements ist, und einen ersten Teil (111) und zweiten Teil (112) aufweist;
Durchführen der Leitung durch die Führungsvorrichtung (S3);
wobei das Durchführen der Leitung zwischen dem ersten Teil und dem zweiten Teil des Hauptlagers erfolgt; und
wobei das Durchführen derart erfolgt, dass eine äußere Oberfläche der Leitung im geführten Zustand einen Abstand von einer Drehachse des Lagers besitzt, der zwischen 0 mm und 10 mm beträgt.

## Claims

1. A suspended bicycle frame (101) for guiding a cable on the bicycle frame, having a frame element and a further frame element,
wherein the frame element is a front structure (109) of the suspended bicycle frame;
wherein the further frame element is a swing arm (110) of the suspended bicycle frame;
the frame element having:
a guide device (103) for guiding the cable (108) on the suspended bicycle frame;
wherein the frame element is movably attached on the swing arm (104) by means of a bearing (105);
wherein the bearing is a two-part main bearing of the further frame element and has a first part (111) and second part (112);
**characterised in that**
the guiding of the cable takes place between the first part and the second part of the main bearing; wherein the guide device is constructed in such a manner that the cable is guided in such a manner that it intersects a cylindrical region with radius 10 mm around the axis of rotation of the bearing.

2. The suspended bicycle frame according to Claim 1,
wherein the swing arm has two channel openings (201) and a channel (203);
wherein the channel extends between the two channel openings; and
wherein the channel is constructed for guiding the cable.

3. The suspended bicycle frame according to one of the preceding claims, the frame element furthermore having:
a seat tube (113) having at least one first opening (114);
a fastening element (115) for attaching the bearing (105);
wherein the fastening element has at least one second opening (204); and
wherein the cable runs in the guided state trough the first opening in the seat tube and the second opening in the fastening element.

4. The suspended bicycle frame according to Claim 3,
wherein the second opening is structured for the exit of the cable from the fastening element.

5. The suspended bicycle frame according to Claim 4,
wherein the second opening has a spacing (205) from the axis of rotation, which is selected from the group consisting of 0 mm to 10 mm, 10 mm to 20 mm, and 20 mm to 30 mm.

6. The suspended bicycle frame according to one of the preceding Claims 4 or 5,
wherein a first surface (206) of the second opening has such a shape, that the production of contact between the cable and the first surface during a movement (116) of the frame element with respect to the further frame element is prevented.

7. The suspended bicycle frame according to Claim 6,
wherein the first surface is selected from the group consisting of cylindrical surface and conical surface.

8. The suspended bicycle frame according to one of the preceding Claims 4 to 7, the frame element furthermore having:
an insert (600);
wherein the insert is realised for insertion into the second opening; and
wherein a second surface (601) of the insert has such a shape, that a contact between the cable and the second surface during a movement (116) of the frame element with respect to the further frame element is prevented.

9. The suspended bicycle frame according to Claim 8,
wherein the second surface is selected from the group consisting of cylindrical surface and conical surface.

10. The suspended bicycle frame according to Claim 8 or 9,
wherein the insert is realised for passage through at least one of the two openings; and
wherein the insert extends from the first opening to the second opening.

11. A bicycle having a suspended bicycle frame according to one of Claims 1 to 10.

12. The bicycle according to Claim 11, furthermore comprising: the cable.

13. A method for attaching and guiding a cable on a suspended bicycle frame, the method having the following steps:
providing a frame element having a guide device for guiding the cable (S1);
attaching a further frame element on the frame element by means of a bearing (S2);
wherein the further frame element is a swing arm (110) of the suspended bicycle frame;
wherein the attachment takes place in such a manner that the frame element can execute a relative movement to the second frame element;
wherein the bearing is a two-part main bearing of the further frame element and has a first part (111) and second part (112);
passing the cable through the guide device (S3);
wherein the cable is passed through between the first part and the second part of the main bearing; and
wherein the said cable is passed through in such a manner that an outer surface of the cable in the guided state has a spacing from an axis of rotation of the bearing, which is between 0 mm and 10 mm.

## Revendications

1. Cadre suspendu de véhicule à deux roues (101) pour le guidage d'une ligne sur le cadre de véhicule à deux roues, avec un élément de cadre et un autre élément de cadre, dans lequel l'élément de cadre est une structure avant (109) du cadre suspendu de véhicule à deux roues ; dans lequel l'autre élément de cadre est un bras oscillant (110) du cadre suspendu de véhicule à deux roues ;
l'élément de cadre comportant :
un dispositif de guidage (103) pour le guidage de la ligne (108) sur le cadre suspendu de véhicule à deux roues ;
dans lequel l'élément de cadre est fixé de façon mobile au bras oscillant (104) au moyen d'un palier (105) ;
dans lequel le palier est un palier principal en deux parties de l'autre élément de cadre, et comporte une première partie (111) et une deuxième partie (112) ;
**caractérisé en ce que**
le guidage de la ligne est réalisé entre la première partie et la deuxième partie du palier principal ; le dispositif de guidage étant conçu de manière à ce que la ligne soit guidée de façon à croiser une région cylindrique avec un rayon de 10 mm autour de l'axe de rotation du palier.

2. Cadre suspendu de véhicule à deux roues selon la revendication 1,
dans lequel le bras oscillant comporte deux ouvertures de canal (201) et un canal (203) ;
dans lequel le canal s'étend entre les deux ouvertures de canal ; et
dans lequel le canal est conçu pour guider la ligne.

3. Cadre suspendu de véhicule à deux roues selon l'une des revendications précédentes, l'élément de cadre comportant en outre :
un tube de selle (113) avec au moins une première ouverture (114) ;
un élément de fixation (115) pour la fixation du palier (105) ;
dans lequel l'élément de fixation comporte au moins une deuxième ouverture (204) ; et
dans lequel, dans l'état guidé, la ligne s'étend à travers la première ouverture dans le tube de selle et la deuxième ouverture dans l'élément de fixation.

4. Cadre suspendu de véhicule à deux roues selon la revendication 3,
dans lequel la deuxième ouverture est conçue pour la sortie de la ligne hors de l'élément de fixation.

5. Cadre suspendu de véhicule à deux roues selon la revendication 4,
dans lequel la deuxième ouverture présente un écart (205) par rapport à l'axe de rotation, lequel est sélectionné parmi le groupe comprenant de 0 mm à 10 mm, de 10 mm à 20 mm, et de 20 mm à 30 mm.

6. Cadre suspendu de véhicule à deux roues selon l'une des revendications précédentes 4 ou 5,
dans lequel une première surface (206) de la deuxième ouverture présente une forme empêchant l'établissement d'un contact entre la ligne et la première surface lors d'un déplacement (116) de l'élément de cadre par rapport à l'autre élément de cadre.

7. Cadre suspendu de véhicule à deux roues selon la revendication 6,
dans lequel la première surface est sélectionnée parmi le groupe comprenant une surface cylindrique et une surface conique.

8. Cadre suspendu de véhicule à deux roues selon l'une des revendications 4 à 7,
l'élément de cadre comportant en outre :
un insert (600) ;
dans lequel l'insert est conçu pour être inséré dans la deuxième ouverture ; et
dans lequel une deuxième surface (601) de l'insert présente une forme telle que lors d'un déplacement (116) de l'élément de cadre par rapport à l'autre élément de cadre, l'établissement d'un contact entre la ligne et la deuxième surface est empêché.

9. Cadre suspendu de véhicule à deux roues selon la revendication 8,
dans lequel la deuxième surface est sélectionnée parmi le groupe comprenant une surface cylindrique et une surface conique.

10. Cadre suspendu de véhicule à deux roues selon la revendication 8 ou 9,
dans lequel l'insert est en outre conçu pour être inséré à travers au moins l'une des deux ouvertures ; et
dans lequel l'insert s'étend de la première ouverture jusqu'à la deuxième ouverture.

11. Bicyclette avec un cadre suspendu de véhicule à deux roues selon l'une des revendications 1 à 10.

12. Bicyclette selon la revendication 11, comportant en outre :
la ligne.

13. Procédé pour la fixation et le guidage d'une ligne sur un cadre suspendu de véhicule à deux roues, le procédé comprenant les étapes suivantes :
mise à disposition d'un élément de cadre avec un dispositif de guidage pour le guidage de la ligne (S1) ;
fixation d'un autre élément de cadre sur l'élément de cadre au moyen d'un palier (S2) ;
dans lequel l'autre élément de cadre est un bras oscillant (110) du cadre suspendu de véhicule à deux roues ;
dans lequel la fixation est réalisée de manière à ce que l'élément de cadre puisse effectuer un déplacement relatif par rapport au deuxième élément de cadre ;
dans lequel le palier est un palier principal en deux parties de l'autre élément de cadre, et comporte une première partie (111) et une deuxième partie (112) ;
passage de la ligne à travers le dispositif de guidage (S3) ;
dans lequel le passage de la ligne est réalisé entre la première partie et la deuxième partie du palier principal ; et
dans lequel le passage est réalisé de manière à ce que dans l'état guidé, une surface extérieure de la ligne présente un écart compris entre 0 mm et 10 mm par rapport à l'axe de rotation du palier.
